# EUROPÄISCHE PATENTSCHRIFT

(11) **EP 1 903 665 B1**
(45) Veröffentlichungstag und Bekanntmachung des Hinweises auf die Patenterteilung: **24.02.2016**
(21) Anmeldenummer: 07017625.0
(22) Anmeldetag: 08.09.2007
(51) Int. Cl.: H02K 15/03, H02K 15/12, H02K 1/27, H02K 7/18

(54) **Verfahren zur Befestigung Magnetpole bildender Permanentmagnete am Läufer einer elektrischen Maschine, Läufer und Formelement zur Befestigung der Permanentmagnete**
A method for fastening permanent magnet magnetic poles to the rotor of an electric machine, rotor and mould for fastening the permanent magnets
Procédé de fixation des pôles magnétiques en aimants sur le rotor d'une machine électrique, rotor et moule de fixation des aimants

(30) Priorität: 20.09.2006 DE 102006044268
(43) Veröffentlichungstag der Anmeldung: 26.03.2008
(73) Patentinhaber: VENSYS Energy AG, 66539 Neunkirchen (DE)
(72) Erfinder: Rinck, Jürgen, 66399 Mandelbachtal (DE); Herrmann, Axel, 66119 Saarbrücken (DE)
(74) Vertreter: Bernhardt, Reinhold

(56) Entgegenhaltungen:
- EP-A1- 1 536 543
- FR-A1- 2 707 813
- US-A1- 2002 158 532

## Beschreibung

Die Erfindung betrifft ein Verfahren zur Befestigung Magnetpole bildender Permanentmagnete an einer Trägerfläche des Läufers einer elektrischen Maschine, bei dem durch Anlegen eines Formelements an die Trägerfläche eine Gießform gebildet wird, wobei der Formhohlraum der gebildeten Gießform auf einer Seite durch die Trägerfläche begrenzt wird, ein Permanentmagnet in der gebildeten Gießform in einer gewünschten Position angeordnet wird und ein aushärtendes Klebemittel in die gebildete Gießform eingefüllt wird, wobei das Klebemittel unter Verklebung des Permanentmagneten mit der Trägerfläche zwischen dem Permanentmagneten und der Wand des Formhohlraums gebildete Zwischenräume ausfüllt.

Die positionsgenaue und sichere Befestigung von Permanentmagneten am Läufer permanent erregter elektrischer Maschinen, insbesondere deren Befestigung durch Klebung, bereitet Schwierigkeiten. Wegen der hohen Anziehungskräfte zwischen den Permanentmagneten und dem Läufer lassen sich die Permanentmagnete nicht leicht handhaben.

Ein solches Verfahren der eingangs genannten Art geht aus der US 2002/0158532 A1 hervor. Zur Befestigung der Permanentmagnete an dem Läufer ist eine zylindrische Harzgussform vorgesehen, auf deren Außenseite die Permanentmagnete angeordnet und mittels eines Magnethaltemechanismus gehalten werden. Nach Anordnung der Permanentmagnete an der Harzgussform wird der Läufer, der eine zylindrische Umfangswand und einen den Läufer auf einer Seite abschließenden Bodenabschnitt aufweist, auf die mit den Magneten versehene Harzgussform aufgesetzt und die zwischen dem Läufer und der Harzgussform gebildeten Zwischenräume werden mit Harz gefüllt.
Weitere Verfahren zur Befestigung von Permanentmagneten am Läufer elektrischer Maschinen gehen z.B. aus der DE 39 13 618 A1, der EP 0 410 048 B1 und der EP 1 473 816 A1 hervor.

Der Erfindung liegt die Aufgabe zugrunde, ein Verfahren zu schaffen, das eine positionsgenaue und sichere Verbindung von Permanentmagneten mit den Läufern elektrischer Maschinen vereinfacht.

Das diese Aufgabe lösende Verfahren nach der Erfindung ist dadurch gekennzeichnet, dass der Permanentmagnet zur einfacheren Anordnung in der gewünschten Position nach dem Anlegen des Formelements an die Trägerfläche in die gebildete Gießform eingeführt und in Bezug auf die Trägerfläche gehalten wird.

Die Gießform ermöglicht es, den Permanentmagneten präzise in der für die Verklebung erforderlichen Ausgangsposition anzuordnen und eine außerordentlich stabile Klebverbindung herzustellen.

Der Permanentmagnet lässt sich in der Gießform im Abstand von der Wand des Formhohlraums so anordnen, dass nahezu die gesamte Oberfläche des Permanentmagneten mit ausgehärtetem Klebematerial bedeckt und der Permanentmagnet dadurch vor Korrosion geschützt ist. Entsprechend können sehr korrosionsanfällige, aber außerordentlich starke Hochenergiemagnete eingesetzt werden.

Zweckmäßig wird das Klebemittel unter leichtem Druck von unten in eine oben offene GieBform eingefüllt. Das Klebemittel kann dann langsam unter Meidung des Einschlusses von Luftblasen in der Gießform aufsteigen und Luft kann nach oben entweichen.

Der Permanentmagnet wird vorzugsweise von oben in eine oben offene Gießform eingeschoben, wobei in einer bevorzugten Ausführungsform der Erfindung der Permanentmagnet aus Teilstücken unter Einschieben der Teilstücke in die Gießform innerhalb der Gießform zusammengefügt wird. Vorteilhaft lassen sich die kleineren Teilstücke leichter herstellen und leichter Handhaben als ein einstückiger Gesamtmagnet.

In einer besonders bevorzugten Ausführungsform der Erfindung wird das Formelement aus einem weichmagnetischen Material hergestellt und so durch magnetischen Rückschluss mit dem Formelement die zur Trägerfläche gerichtete, auf den Permanentmagneten bzw. die Teilstücke einwirkende Anziehungskraft herabgesetzt. Beim Einschieben des Permanentmagneten bzw. der Teilstücke in die Gießform treten nur verhältnismäßig geringe Reibungskräfte durch Anziehung des Permanentmagneten bzw. der Teilstücke gegen die Trägerfläche auf.

In weiterer Ausgestaltung der Erfindung können mehrere, in die Gießform einzuschiebende Teilstücke auf einer Gleitbahn einer Einschubeinrichtung in Einschubrichtung zueinander versetzt in einer Ausgangsposition für den Einschubvorgang angeordnet werden. Durch den Versatz werden die Anordnung auf der Gleitbahn behindernde Abstoßungskräfte zwischen den Teilstücken vermieden.

Bei den Ausgangspositionen können Referenzmagnete angeordnet werden, die durch Abstoßung die Anordnung von Teilstücken in der Ausgangsposition in falscher Polung verhindern.

Vorzugsweise wird das Formelement um eine Gelenkachse verschwenkbar an dem Läufer befestigt, so dass es durch Verschwenken von der Trägerfläche abgehoben und so der eingegossene Magnetpol entformt werden kann.

In weiterer Ausgestaltung der Erfindung erfolgt das Einschieben der Permanentmagnete bzw. Teilstücke bei geringem, einstellbarem Abstand des Formelements von der Trägerfläche und das Formelement wird anschließend unter Abdichtung des Formhohlraums durch eine Strangdichtung an die Trägerfläche angelegt. Der geringe Abstand zur Trägerfläche erleichtert das Einschieben des Permanentmagneten bzw. der Teilstücke in den noch etwas geöffneten und dadurch mehr Spiel bietenden Formhohlraum.

In den Permanentmagneten und die Trägerfläche können Nuten eingebracht werden, in denen Klebemittel fließen oder/und entweichende Luft strömen kann. Die Auffüllung der oben genannten Spalte und Zwischenräume wird dadurch erleichtert und der Auffüllvorgang verkürzt.

Um das Aushärten des Klebemittels in der Gießform zu beschleunigen, kann die Gießform beheizt werden.

Vorzugsweise bildet das aushärtende Klebemittel ein dauerelastisches Material.

Die Erfindung wird nachfolgend anhand eines Ausführungsbeispiels und der beiliegenden, sich auf dieses Ausführungsbeispiel beziehenden Zeichnungen näher erläutert. Es zeigen:
- Fig. 1: einen Teil eines Läuferrings einer Synchronmaschine, an welchem eine Vorrichtung zum Befestigen von Permanentmagneten an dem Läuferring angebracht ist, in perspektivischer Darstellung,
- Fig. 2: einen in der Befestigungsvorrichtung von Fig. 1 verwendetes Formelement in Blickrichtung zur Drehachse des Läuferrings gesehen,
- Fig. 3: das Formelement von Fig. 2 in einem Querschnitt,
- Fig. 4: die Vorrichtung von Fig. 1 mit einer daran angebrachten Einschubeinrichtung, in perspektivischer Darstellung, und
- Fig. 5: eine gesonderte Darstellung der Einschubeinrichtung von Fig. 4 in einer zu der Ansicht von Fig. 4 um 90° gedrehten Ansicht.

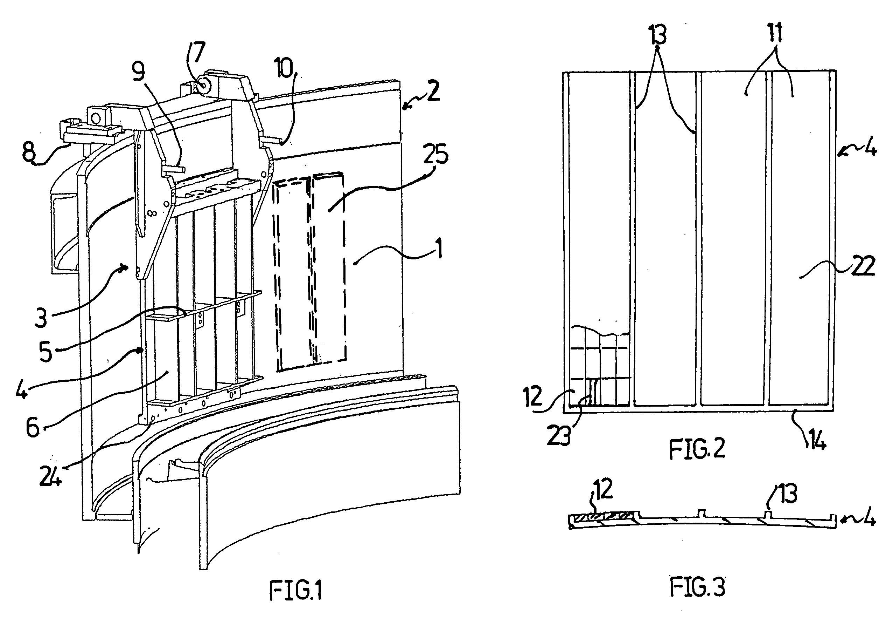

An einer Trägerfläche 1 eines in Fig. 1 ausschnittsweise dargestellten Läuferrings 2 einer Synchronmaschine sind quaderförmige Permanentmagnete 25 zu befestigen, welche abwechselnd einen magnetischen Nord- und einen magnetischen Südpol bilden. Zur Befestigung dient eine Vorrichtung 3, durch welche sich gleichzeitig insgesamt vier solcher Magnete in einem vorgegebenen tangentialen Abstand zueinander an der Trägerfläche 1 befestigen lassen.

Die Befestigungsvorrichtung 3 umfasst ein an die Trägerfläche 1 anlegbares Formelement 4, das auf seiner der Trägerfläche 1 abgewandten Seite durch Rippen 5 und 6 versteift ist und, wie weiter unten erläutert wird, zusammen mit der Trägerfläche 1 Gießformen bildet. Das Formelement 4 ist um eine Drehachse 7 verschwenkbar an einer mit dem Läuferring 2 verbundenen Halteeinrichtung 8 angebracht. Über Stellschrauben 9 und 10 lässt sich der Abstand zwischen dem Formelement 4 und der Trägerfläche 1 variieren.

Fig. 2, welche die der Trägerfläche 1 zugewandte Seite des Formelements 4 zeigt, lässt vier Fächer 11 für den Einschub jeweils eines Permanentmagneten 25 erkennen. Die Permanentmagnete 25 bestehen aus Teilstücken 12, die in dreizehn Reihen und vier Spalten angeordnet sind, so dass in dem betreffenden Ausführungsbeispiel jeder Permanentmagnet 25 aus zweiundfünfzig Teilstücken 12 zusammengesetzt ist.

Die zu der Trägerfläche 1 hin offenen Fächer 11 sind nur an ihrer Unterseite durch eine Begrenzungswand 14 geschlossen. An der Oberseite sind sie offen. Am Boden 22 der Fächer 11 ist eine Teflonbeschichtung vorgesehen.

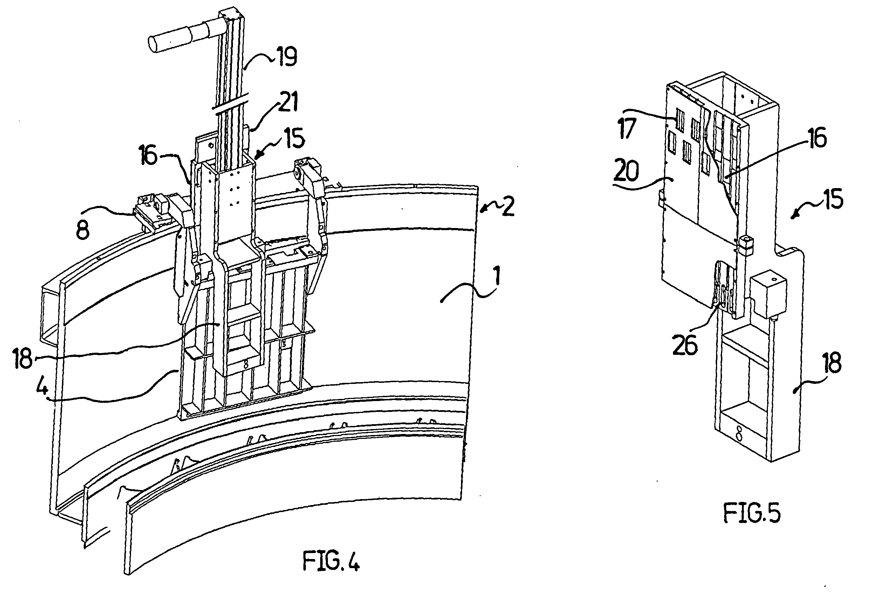

In der in Fig. 4 gezeigten Anordnung des Formelements 4 lassen sich Teilstücke 12 in vier, durch die Fächer 11 und die Trägerwand 1 gebildete Kammern mit Hilfe einer motorgetriebenen Einschubeinrichtung 15 einschieben. Die Einschubeinrichtung 15 weist eine Gleitbahn 16 für insgesamt acht Teilstücke auf. Durch Fenster 17 in einer Abdeckung 20 hindurch können die Teilstücke auf der Gleitbahn 16 in einer Ausgangsposition für den Einschubvorgang angeordnet werden, wobei die Ausgangspositionen in Einschubrichtung zueinander versetzt sind, damit das Anordnen der Teilstücke in der Ausgangsposition nicht durch gegenseitige Abstoßung behindert wird.

Ein unterer Abschnitt 18 der Einschubeinrichtung 15 dient der Verbindung mit der Befestigungsvorrichtung 3. Ein motorgetriebener Schieber 19 bewegt die in der Ausgangsposition angeordneten vier Teilstücke 12 über Mitnehmer 21 in Richtung zu dem Formelement 4, wobei die Teilstücke durch die Abdeckung 20 auf der Gleitbahn 16 gehalten werden.

In dem betreffenden Ausführungsbeispiel sind am Umfang des Läuferrings 2 insgesamt 4992 Teilstücke anzubringen, die aus jeweils zweiundfünfzig Teilstücken zusammengesetzte Permanentmagnete bzw. Pole bilden. Zur jeweils gleichzeitigen Anbringung von vier Permanentmagneten wird die Befestigungsvorrichtung 3 in der erforderlichen Position an dem Läuferring 2 befestigt und in die in den Fig. 1 und 4 gezeigte Schwenkstellung gebracht. Durch die Stellschrauben 9 und 10 lässt sich ein gewünschter Abstand zwischen dem Formelement 4 und der Trägerwand 1 herstellen. In einer solchen Abstandsposition erfolgt das Einschieben der Teilstücke 12 in die Fächer 11, denen auf ihrer offenen Seite die Trägerwand 1 gegenüber liegt. Jeweils acht Teilstücke lassen sich mit Hilfe der Einschubeinrichtung 15 gleichzeitig in die durch Fächer 11 und die Trägerwand 1 gebildeten Kammern einbringen. Referenzmagnete an der den Fenstern 17 gegenüberliegenden Rückseite der Gleitbahn 16 (nicht gezeigt) sorgen dafür, dass die Teilstücke 12 nur in richtiger Polung in der Ausgangsposition auf der Gleitbahn 16 angeordnet werden können.

Die aus mehreren Einzelbahnen gebildete Gleitbahn 16 besteht aus nicht weichmagnetischem Material. Während des Vorschiebens der Teilstücke 12 auf der Gleitbahn sind daher keine Reibungskräfte infolge Anziehung der Teilstücke gegen die Gleitbahn zu überwinden. Am Übergang zu den Fächern 11 bzw. Kammern sind Anschläge 26 gebildet, durch welche die Teilstücke 12 zum gleichzeitigen Eintritt in die Kammern in einer geraden Reihe ausgerichtet werden. Die Ausrichtung könnte alternativ oder zusätzlich auch dadurch erfolgen, dass ein Endabschnitt der Gleitbahn aus weichmagnetischem Material hergestellt wird.

Beim Eintritt in die Fächer 11 bzw. Kammern wirken an sich starke Anziehungskräfte in Richtung zur Trägerwand 1. Diese Anziehungskräfte sind jedoch weitgehend dadurch kompensiert, dass das Formteil 4 aus einem weichmagnetischen Material und somit ein magnetischer Rückschluss zum Formteil besteht. Bei entsprechender Magnetisierbarkeit des Formteilmaterials könnte die Anziehungskraft in Richtung Trägerfläche völlig überwunden und sogar eine Anziehungskraft in Richtung zum Formteil erzeugt werden. Durch die Herabsetzung der Anziehungskraft sind auch beim Einschieben der Teilstücke in die Kammern keine großen, durch Anziehungskraft bedingte Reibungskräfte zu überwinden.

Beim Vorschub der ersten Reihe von Teilstücken kommt es zum Anschlag der Teilstücke gegen die Begrenzungswände 14. Die folgenden Reihen von jeweils vier Teilstücken schlagen gegen die vorangehend eingeschobenen Teilstücke an.

Nach Zusammensetzung von vier Permanentmagneten aus Teilstücken durch Einschieben der Teilstücke in die Kammern wird das Formelement 4 mit Hilfe der Stellschrauben 9 und 10 weiter auf die Trägerfläche 2 abgesenkt, wobei (nicht gezeigte) Elastomerdichtungen durch das Formteil 4 und die Trägerwand gebildete Gießformen abdichten. Die quaderförmigen Teilstücke 12 liegen mit zwei Seitenkanten gegen die leicht gerundete Trägerfläche 2 an, wobei zwischen den Teilstücken und der Trägerfläche jeweils ein Spalt gebildet ist. Ferner bestehende Spalte zwischen den Seitenflächen der äußeren Teilstücke und den Stegen 13, die leicht konisch ausgebildet sind. Auch die mit Teflon beschichteten Bodenflächen 22 der Fächer 11 weisen einen geringen Abstand zu den der Trägerfläche 1 abgewandten Seiten der Teilstücke 12 auf.

Über Stutzen 24 an der Unterseite des Formelements 4 wird nun ein flüssiges Klebemittel unter leichtem Druck eingefüllt. Das Klebemittel steigt in den genannten Spalten und Zwischenräumen langsam nach oben. Das Ansteigen des Klebemittels wird durch bei 23 angedeutete Längsnuten in den Teilstücken 12 gefördert. Durch die Längsnuten kann auch Luft entweichen, die nach oben austritt. Zu den Nuten 23 quer verlaufende Nuten können in der Trägerfläche 1 gebildet sein. Das Einfüllen von Klebemittel wird beendet, wenn der Klebemittelspiegel die oberen Enden der obersten Teilstücke übersteigt.

Es ist nun die Aushärtung des Klebemittels abzuwarten, welche durch Beheizung der Gießform, insbesondere des Formelements 4, beschleunigt werden kann.

Nach dem Aushärten wird das Formelement 4 unter Entformung der vier Permanentmagnete 25 um die Drehachse 7 verschwenkt. Die Permanentmagnete sind nicht nur mit der Trägerfläche 1 verklebt sondern nahezu vollständig in das ausgehärtete Klebemittel eingebettet und vor Korrosion geschützt.

Die Entformung wird durch die Teflonbeschichtung am Boden 22 der Fächer 11 und durch Aufbringen von Trennmittel an den Flanken der Stege 13 und der Begrenzungswand 14 ermöglicht. Die Teflonbeschichtung sorgt dafür, dass die Teilstücke 12 beim Einschieben in die Gießform ruckfrei gleiten können.

Zum Anordnen der Teilstücke 12 in der Ausgangsposition auf der Gleitbahn 16 kann ein hammerartiges Werkzeug verwendet werden, dessen Kopf aus einem weichmagnetischen Werkstoff mit einer nicht magnetisierbaren Beschichtung besteht. Die Dicke der Beschichtung kann so gewählt sein, dass sich eine gewünschte Anziehungskraft zwischen Teilstück und Hammerkopf einstellt.

Die mit der Trägerfläche 1 verklebten Magnetpole können durch eine Bandage oder andere geeignete Abdeckung zusätzlich gegen Lösen gesichert werden.

## Patentansprüche

1. Verfahren zur Befestigung Magnetpole bildender Permanentmagnete (25) an einer Trägerfläche (1) des Läufers (2) einer elektrischen Maschine, bei dem durch Anlegen eines Formelements (4) an die Trägerfläche (1) eine Gießform gebildet wird, wobei der Formhohlraum der gebildeten Gießform auf einer Seite durch die Trägerfläche (1) begrenzt wird, ein Permanentmagnet (25) in der gebildeten Gießform in einer gewünschten Position angeordnet wird und ein aushärtendes Klebemittel in die gebildete Gießform eingefüllt wird, wobei das Klebemittel unter Verklebung des Permanentmagneten (25) mit der Trägerfläche (1) zwischen dem Permanentmagneten (25) und der Wand des formhohlraums gebildete Zwischenräume ausfüllt,
**dadurch gekennzeichnet,**
**dass** der Permanentmagnet (25) zur einfacheren Anordnung in der Position nach dem Anlegen des Formelements (4) an die Trägerfläche (1) in die gebildete Gießform eingeführt und in Bezug auf die Trägerfläche (1) gehalten wird.

2. Verfahren nach Anspruch 1,
**dadurch gekennzeichnet,**
**dass** das Klebemittel von unten in die oben offene Gießform eingefüllt wird.

3. Verfahren nach Anspruch oder 2,
**dadurch gekennzeichnet,**
**dass** der Permanentmagnet (25) von oben in die oben offene Gießform, eingeschoben wird.

4. Verfahren nach Anspruch 3,
**dadurch gekennzeichnet,**
**dass** der Permanentmagnet (25) aus Teilstücken (12) durch Einschieben der Teilsiücke (12) in die Gießform innerhalb der Gießform zusammengesetzt wird.

5. Verfahren nach einem der Ansprüche 1 bis 4,
**dadurch gekennzeichnet,**
**dass** das Formelement (4) aus einem weichmagnetischen Material hergestellt und so durch magnetischen Rückschluss mit dem Formelement (4) die zur Trägerfläche (1) hin gerichtete, auf den Permanentmagneten (25) bzw. die Teilstücke (12) einwirkende Anziehungskraft herabgesetzt wird.

6. Verfahren nach einem der Ansprüche 1 bis 5,
**dadurch gekennzeichnet,**
**dass** der Permanentmagnet (25) bzw. die Teilstücke mit Hilfe einer vorzugsweise motorgetriebenen, Einschubeinrichtung (15) in die Gießform eingeschoben wird bzw. werden,

7. Verfahren nach Anspruch 6,
**dadurch gekennzeichnet,**
**dass** mehrere, in die Gießform einzuschiebende Teilstücke (12) auf einer Gleitbahn (16) der Einschubvorrichtung in Einschubrichtung zueinander versetzt in einer Ausgangsposition für den Einschubvorgang angeordnet werden,

8. Verfahren nach Anspruch 6 oder 7,
**dadurch gekennzeichnet,**
**dass** bei den Ausgangspositionen Referenzmagnete angeordnet werden, die durch Abstoßung die Anordnung von Teilstücken in der Ausgangsposition in falscher Polung verhindern.

9. Verfahren nach einem der Ansprüche 1 bis 8,
**dadurch gekennzeichnet,**
**dass** das Formelement (8) um eine Gelenkachse (7) verschwenkbar an dem Läufer (2) befestigt und das Formelement (4) zur Entformung durch Verschwenkung von der Trägerfläche dem eingegossenen Permanentmagneten (25) abgehoben wird.

10. Verfahren nach einem der Ansprüche 1 bis 9,
**dadurch gekennzeichnet,**
**dass** das Einschieben der Permanentmagnete (25) bzw, der Teilstücke (12) bei geringem Abstand des Formelements (4) von der Trägerfläche (1) erfolgt und das Formelement (4) abschließend unter Betätigung einer Abstandseinstelleinrichtung (9, 10) unter Abdichtung des Formhohlraums an die Trägerfläche (1) angelegt wird.

11. Verfahren nach einem der Ansprüche 1 bis 10,
**dadurch gekennzeichnet**
**dass** der Permanentmagnet (25) und/oder die Trägerfläche (1) mit Nuten (23) versehen wird, in denen Klebemittel fließen oder/und entweichende Luft strömen kann.

12. Läufer (2) einer elektrischen Maschine, mit einer Trägerfläche (1), an der Magnetpole bildende Permanentmagnete (25) angebracht sind, wobei die Permanentmagnete (25) mit der Trägerfläche (1) durch ein ausgehärtetes Klebemittel verbunden sind, das in eine die Permanentmagnete (25) aufnehmende Gießform, deren Formhohlraum auf einer Seite durch die Trägerflache (1) begrenzt ist, unter Ausfüllung der Zwischenräume zwischen dem Permanentmagneten und der Wand des Formhohlraumes eingegossen ist,
**dadurch gekennzeichnet,**
**dass** die Permanentmagnete (25) jeweils aus einer Vielzahl von Teilstücken (12) bestehen.

13. Formelement zur Befestigung Magnetpole bildender Permanentmagnete (25) an einer Trägerfläche (1) eines Läufers (2) einer elektrischen Maschine, das vorgesehen ist, unter Anlage an die Trägerfläche (1) eine Gießform zu bilden, deren Formhohlraum auf einer Seite durch die Trägerfläche (1) begrenzt ist,
**dadurch gekennzeichnet,**
**dass** das Formelement (4) zur Aufnahme der Permanentmagnete (25) Flächen (11) aufweist, die an ihrer Oberseite offen sind, so dass die durch Anordnung des Formelements (4) an der Trägerfläche (1) gebildete Gießform zum Einschieben der Permanentmagnete (25) offen ist.

14. Formelement nach Anspruch 13,
**dadurch gekennzeichnet,**
**dass** das Formelement (4) aus einem weichmagnetischen Material hergestellt

15. Formelement nach Anspruch 13 oder 14,
**dadurch gekennzeichnet,**
**dass** das Formelement (4) um eine Gelenkachse (7) verschwenkbar an dem läufer berestigbar ist und das Formelement zur Entformung durch Verschwenkung von der Trägerfläche (1) und dem eingegossenen Permanentmagneten (25) obhebbar ist.

## Claims

1. Method for fastening permanent magnets (25), which form magnet poles, to a carrier surface (1) of the rotor (2) of an electrical machine, in which method a casting mould is formed by applying a mould element (4) to the carrier surface (1), wherein the mould cavity of the formed casting mould is bounded on one side by the carrier surface (1), a permanent magnet (25) is arranged in a desired position in the formed casting mould, and the formed casting mould is filled with a curing adhesive, wherein the adhesive fills intermediate spaces which are formed between the permanent magnet (25) and the wall of the mould cavity so as to adhesively bond the permanent magnet (25) to the carrier surface (1),
**characterized**
**in that** the permanent magnet (25), for the purpose of simpler arrangement in the position after application of the mould element (4) to the carrier surface (1), is inserted into the formed casting mould and is held with respect to the carrier surface (1).

2. Method according to Claim 1,
**characterized**
**in that** the casting mould, which is open at the top, is filled with the adhesive from the bottom.

3. Method according to Claim 1 or 2,
**characterized**
**in that** the permanent magnet (25) is inserted into the casting mould, which is open at the top, from above.

4. Method according to Claim 3,
**characterized**
**in that** the permanent magnet (25) which is composed of component pieces (12) is assembled within the casting mould by inserting the component pieces (12) into the casting mould.

5. Method according to one of Claims 1 to 4,
**characterized**
**in that** the mould element (4) is produced from a soft-magnetic material and therefore the attraction force which is directed towards the carrier surface (1) and acts on the permanent magnet (25) or the component pieces (12) is reduced by magnetic return with the mould element (4).

6. Method according to one of Claims 1 to 5, **characterized**
**in that** the permanent magnet (25) or the component pieces is or are inserted into the casting mould with the aid of a preferably motor-driven insertion device (15) .

7. Method according to Claim 6,
**characterized**
**in that** a plurality of component pieces (12) which are to be inserted into the casting mould are arranged on a sliding path (16) of the insertion apparatus in a manner offset in relation to one another in the insertion direction in a starting position for the insertion process.

8. Method according to Claim 6 or 7,
**characterized**
**in that**, at the starting positions, reference magnets which prevent the arrangement of component pieces with the incorrect polarity in the starting position by repelling them are provided.

9. Method according to one of Claims 1 to 8,
**characterized**
**in that** the mould element (8) is fastened to the rotor (2) such that it can pivot about an articulation axis (7), and the mould element (4) is lifted away from the carrier surface and the encapsulated permanent magnet (25) by pivoting for demoulding purposes.

10. Method according to one of Claims 1 to 9,
**characterized**
**in that** the permanent magnets (25) or the component pieces (12) are inserted when the mould element (4) is at a short distance from the carrier surface (1), and the mould element (4) is finally applied to the carrier surface (1) with operation of a distance setting device (9, 10) so as to seal off the mould cavity.

11. Method according to one of Claims 1 to 10,
**characterized**
**in that** the permanent magnet (25) and/or the carrier surface (1) are/is provided with slots (23) into which adhesive can flow or/and escaping air can flow.

12. Rotor (2) of an electrical machine, having a carrier surface (1) to which permanent magnets (25), which form magnet poles, are fitted, wherein the permanent magnets (25) are connected to the carrier surface (1) by a curing adhesive which is poured into a casting mould, which accommodates the permanent magnets (25) and the mould cavity of which is bounded on one side by the carrier surface (1), so as to fill the intermediate spaces between the permanent magnet and the wall of the mould cavity,
**characterized**
**in that** the permanent magnets (25) each consist of a large number of component pieces (12).

13. Mould element for fastening permanent magnets (25), which form magnet poles, to a carrier surface (1) of a rotor (2) of an electrical machine, which mould element is intended to form a casting mould while bearing against the carrier surface (1), the mould cavity of the said casting mould being bounded on one side by the carrier surface (1),
**characterized**
**in that** the mould element (4) has areas (11) for receiving the permanent magnets (25), the said areas being open at their top face, so that the casting mould which is formed by arranging the mould element (4) on the carrier surface (1) is open for the purpose of inserting the permanent magnets (25).

14. Mould element according to Claim 13,
**characterized**
**in that** the mould element (4) is produced from a soft-magnetic material.

15. Mould element according to Claim 13 or 14,
**characterized**
**in that** the mould element (4) can be fastened to the rotor such that it can pivot about an articulation axis (7), and the mould element can be lifted away from the carrier surface (1) and the encapsulated permanent magnet (25) by pivoting for demoulding purposes.

## Revendications

1. Procédé pour la fixation d'aimants permanents (25), formant des pôles magnétiques, sur une surface porteuse (1) du rotor (2) d'une machine électrique, dans lequel on forme, par application d'un élément de moule (4) sur la surface porteuse (1), un moule de coulée, dans lequel la cavité de moulage du moule de coulée formé est limitée sur un côté par la surface porteuse (1), on agence un aimant permanent (25) dans une position souhaitée dans le moule de coulée formé, et on remplit dans le moule de coulée formé un agent collant durcissable, dans lequel l'agent collant remplit les intervalles formés entre l'élément permanent (25) et la paroi de la cavité de moulage en collant l'aimant permanent (25) avec la surface porteuse (1),
**caractérisé en ce que**
l'aimant permanent (25) est introduit dans le moule de coulée formé, pour faciliter l'agencement dans la position après application de l'élément de moule (4) sur la surface porteuse (1), et il est maintenu par référence à la surface porteuse (1).

2. Procédé selon la revendication 1,
**caractérisé en ce que** l'agent collant est rempli depuis le dessous dans le moule de coulée ouvert en haut.

3. Procédé selon la revendication 1 ou 2,
**caractérisé en ce que** l'aimant permanent (25) est introduit depuis le haut dans le moule de coulée ouvert en haut.

4. Procédé selon la revendication 3,
**caractérisé en ce que** l'aimant permanent (25) est assemblé dans le moule de coulée à partir de morceaux partiels (12) par introduction des morceaux partiels (12) dans le moule de coulée.

5. Procédé selon l'une des revendications 1 à 4,
**caractérisé en ce que** l'élément de moule (4) est fabriqué en un matériau magnétique doux et ainsi par fermeture d'un circuit magnétique avec l'élément de moule (4) on réduit la force d'attraction dirigée vers la surface porteuse (1) et agissant sur l'aimant permanent (25) ou respectivement sur les morceaux partiels (12).

6. Procédé selon l'une des revendications 1 à 5,
**caractérisé en ce que** l'aimant permanent (25) ou respectivement les morceaux partiels est/sont introduit(s) dans le moule de coulée avec l'aide d'un moyen d'introduction (15) de préférence entraîné par moteur.

7. Procédé selon la revendication 6,
**caractérisé en ce que** plusieurs morceaux partiels (12) à introduire dans le moule de coulée sont agencés sur une voie de coulissement (16) du dispositif d'introduction, en décalage les uns par rapport aux autres en direction d'introduction, dans une position de départ pour l'opération d'introduction.

8. Procédé selon la revendication 6 ou 7,
**caractérisé en ce que** l'on agence dans les positions de départ des aimants de référence qui, par répulsion, empêchent l'agencement de morceaux partiels dans la position de départ avec une polarité erronée.

9. Procédé selon l'une des revendications 1 à 8,
**caractérisé en ce que** l'élément de moule (8) est fixé sur le rotor (2) avec possibilité de pivotement autour d'un axe d'articulation (7), et l'élément de moule (14) est soulevé, pour le démoulage, par pivotement depuis la surface porteuse et depuis l'aimant permanent (25) intégré par moulage.

10. Procédé selon l'une des revendications 1 à 9,
**caractérisé en ce que** l'introduction des aimants permanents (25) ou respectivement des morceaux partiels (12) a lieu alors que l'élément de moule (4) est à faible distance de la surface porteuse (1) et l'élément de moule (4) est ensuite appliqué contre la surface porteuse (1) en actionnant un dispositif de réglage de distance (9, 10) et en étanchant la cavité de moulage.

11. Procédé selon l'une des revendications 1 à 10,
**caractérisé en ce que** l'aimant permanent (25) et/ou la surface porteuse (1) est doté(e) de rainures (28) dans lesquelles l'agent collant peut s'écouler et/ou l'air qui s'échappe peut s'écouler.

12. Rotor (2) d'une machine électrique, avec une surface porteuse (1) sur laquelle sont rapportés des aimants permanents (25) formant des pôles magnétiques, dans lequel les aimants permanents (25) sont reliés avec la surface porteuse (1) par un agent collant durcissable qui est coulé dans un moule de coulée qui reçoit les aimants permanents (25) et la cavité de moulage est limitée sur un côté par la surface porteuse (1), en remplissant les espaces intermédiaires entre l'aimant permanent et la paroi de la cavité de moulage,
**caractérisé en ce que**
les aimants permanents (25) sont respectivement constitués d'une pluralité de morceaux partiels (12).

13. Élément de moule pour la fixation d'aimants permanents (25) formant des pôles magnétiques sur une surface porteuse (1) d'un rotor (2) d'une machine électrique, qui est prévu, en l'appliquant contre la surface porteuse (1), pour former un moule de coulée dont la cavité de moulage est limitée sur un côté par la surface porteuse (1),
**caractérisé en ce que**
l'élément de moule (4) comporte, pour la réception des aimants permanents (25), des surfaces qui sont ouvertes au niveau de leur côté supérieur, de sorte que le moule de coulée formé en agençant l'élément de moule (4) sur la surface porteuse (1) est ouvert pour l'introduction des aimants permanents (25).

14. Élément de moule selon la revendication 13,
**caractérisé en ce que** l'élément de moule (4) est réalisé en un matériau magnétique doux.

15. Élément de moule selon la revendication 13 ou 14,
**caractérisé en ce que** l'élément de moule (4) est susceptible d'être fixé sur le rotor avec possibilité de pivotement autour d'un axe d'articulation (7) et l'élément de moule, pour le démoulage, est susceptible d'être soulevé par pivotement depuis la surface porteuse (1) et depuis l'aimant permanent (25) intégré par moulage.
